# EUROPEAN PATENT SPECIFICATION

(11) **EP 4 471 289 B1**
(45) Date of publication and mention of the grant of the patent: **06.05.2026**
(21) Application number: 22921944.9
(22) Date of filing: 24.01.2022
(51) Int. Cl.: F16H 25/22, B62D 5/04

(54) **BALL SCREW DEVICE AND STEERING DEVICE**
KUGELGEWINDEVORRICHTUNG UND LENKVORRICHTUNG
DISPOSITIF DE VIS À BILLES ET DISPOSITIF DE DIRECTION

(43) Date of publication of application: 04.12.2024
(73) Proprietor: JTEKT Corporation, Kariya-shi, Aichi 448-8652 (JP)
(72) Inventor: YAMAMOTO, Ryuta, Kariya-shi, Aichi 448-8652 (JP)
(74) Representative: Winter, Brandl - Partnerschaft mbB
(86) International application number: PCT/JP2022/002420
(87) International publication number: WO 2023/139787

(56) References cited:
- JP-A- 2017 150 502
- JP-A- 2018 105 397

## Description

### TECHNICAL FIELD

The present invention relates to a ball screw device and a steering system comprising a ball screw device.

### BACKGROUND ART

There is a steering system equipped with an RBS (recirculating ball screw) type gearbox that has a ball screw device, such as described in JP 2019-156082 A, for example. Such a ball screw device includes a screw shaft having a groove on an outer periphery thereof, a ball screw nut having a groove on an inner periphery thereof, a return tube, and a plurality of balls. In the ball screw device, the groove of the screw shaft faces the groove of the ball screw nut to form a rolling path that is helical. The return tube has a return path that creates a connection between two points on the rolling path. The rolling path and the return path form a circulation path in which the balls are disposed. The balls circulate through the circulation path in accordance with operation of the ball screw device.

JP 2018 105 397 A discloses a ball screw device according to the preamble of claim 1.

### SUMMARY OF THE INVENTION

### Problem to be Solved by the Invention

There is a demand for ensuring smooth operation of the ball screw device such as described above, while extending the life of the ball screw device.

### Means for Solving the Problem

The objective is achieved by a ball screw device according to claim 1. The ball screw device includes a screw shaft having a groove on an outer periphery of the screw shaft, a ball screw nut having a groove on an inner periphery of the ball screw nut, a plurality of return tubes, and a plurality of balls. The groove of the screw shaft faces the groove of the ball screw nut to form a helical rolling path. Each of the plurality of return tubes includes a return path configured to create a connection between two points of the rolling path, the return path and the rolling path forming a circulation path in which the balls are disposed, a first end portion that serves as an entrance for the balls to enter the return path when the screw shaft or the ball screw nut rotates clockwise, and that serves as an exit for the balls to be discharged from the return path when the screw shaft or the ball screw nut rotates counterclockwise, and a second end portion that serves as an exit for the balls to be discharged from the return path when the screw shaft or the ball screw nut rotates clockwise, and that serves as an entrance for the balls to enter the return path when the screw shaft or the ball screw nut rotates counterclockwise. The ball screw nut has a plurality of attaching portions configured such that the plurality of return tubes is attached from a same attaching direction. The plurality of return tubes includes at least a first return tube and a second return tube. A position of the first end portion of the second return tube relative to a position of the first end portion of the first return tube in a circumferential direction of the ball screw nut is a first relative position, and a position of the second end portion of the second return tube relative to a position of the second end portion of the first return tube in the circumferential direction is a second relative position. At least one of the first relative position and the second relative position includes offset in the circumferential direction.

According to a preferred embodiment of the invention, a steering system is provided. The steering system includes the above-described ball screw device, and a steering shaft linked to the screw shaft.

### BRIEF DESCRIPTION OF THE DRAWINGS

[FIG. 1] FIG. 1 is a schematic diagram of a steering system according to a first embodiment.
[FIG. 2] FIG. 2 is a cross-sectional view of a gearbox that the steering system in FIG. 1 is equipped with.
[FIG. 3] FIG. 3 is a side view of a ball screw device that the gearbox in FIG. 2 is equipped with.
[FIG. 4A] FIG. 4A is a cross-sectional view along a linking portion of a first return tube in the ball screw device in FIG. 3, taken along line IVA-IVA in FIG. 3.
[FIG. 4B] FIG. 4B is a cross-sectional view along a linking portion of a second return tube in the ball screw device in FIG. 3, taken along line IVB-IVB in FIG. 3.
[FIG. 5A] FIG. 5A is a front view of the first return tube provided in the ball screw device in FIG. 3.
[FIG. 5B] FIG. 5B is a front view of the second return tube provided in the ball screw device in FIG. 3.
[FIG. 6A] FIG. 6A is a graph showing a relation between a steering angle and steering torque in a steering system according to a comparative example.
[FIG. 6B] FIG. 6B is a graph showing a relation between a steering angle and steering torque in the steering system in FIG. 1.
[FIG. 7A] FIG. 7A is a cross-sectional view taken along a linking portion of a first return tube in a ball screw device according to a second embodiment.
[FIG. 7B] FIG. 7B is a cross-sectional view taken along a linking portion of a second return tube in the ball screw device according to the second embodiment.
[FIG. 8] FIG. 8 is a side view of a ball screw device according to a third embodiment.
[FIG. 9A] FIG. 9A is a cross-sectional view along a linking portion of a first return tube in the ball screw device in FIG. 8, and is a cross-sectional view of the ball screw device along line IXA-IXA in FIG. 8.
[FIG. 9B] FIG. 9B is a cross-sectional view along a linking portion of a second return tube in the ball screw device in FIG. 8, and is a cross-sectional view of the ball screw device along line IXB-IXB in FIG. 8.

### MODES FOR CARRYING OUT THE INVENTION

### (First Embodiment)

A first embodiment of a ball screw device and a steering system will be described below with reference to the drawings.

### (Overall Configuration)

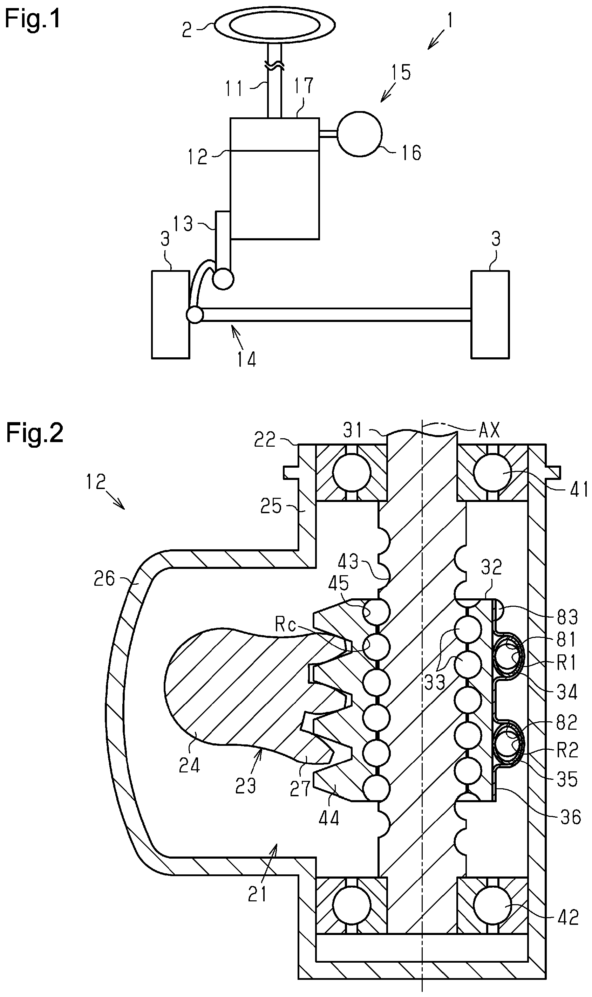

The steering system 1 illustrated in FIG. 1 steers steered wheels 3 based on operation of a steering wheel 2 by a driver. The steering system 1 includes a steering shaft 11, a gearbox 12, a pitman arm 13, and a link mechanism 14. One end of the steering shaft 11 is linked to the steering wheel 2, and the other end of the steering shaft 11 is linked to a gearbox 12. The gearbox 12 converts rotation of the steering shaft 11 into swinging motion of the pitman arm 13. The swinging motion of the pitman arm 13 is transmitted to the steered wheels 3 via the link mechanism 14, thereby steering the steered wheels 3.

The steering system 1 also includes an electric actuator 15 that generates an assist force to assist steering operations by the driver. The electric actuator 15 includes a motor 16 and a speed reducer 17. The speed reducer 17 is, for example, a worm and wheel. The motor 16 is linked to the steering shaft 11 via the speed reducer 17. The electric actuator 15 applies an assist force to the steering shaft 11 by transmitting rotation of the motor 16 to the steering shaft 11 with the speed thereof reduced by the speed reducer 17. That is to say, the steering system 1 according to the present embodiment is an electric power steering system.

### (Gearbox 12)

As illustrated in FIG. 2, the gearbox 12 is an RBS type gearbox having a ball screw device 21. In addition to the ball screw device 21, the gearbox 12 includes a housing 22 and a sector shaft 23 having a sector portion 24.

The housing 22 has, for example, a main unit portion 25 and a bulging portion 26. The main unit portion 25 has, for example, a tubular shape with one end thereof closed. The bulging portion 26 is provided on a peripheral wall of the main unit portion 25, and an inside of the bulging portion 26 communicates with an inside of the main unit portion 25. The bulging portion 26 has, for example, a tubular shape extending in a direction perpendicular to an axial direction of the main unit portion 25. Note that in the following description, for convenience of description, the closed side of the housing 22 will be referred to as a lower side, and the open side of the housing 22 will be referred to as an upper side. A housing that is omitted from illustration, of the speed reducer 17, is fixed to the upper side of the housing 22.

Note that it is sufficient for the term "tubular" as used in the present specification to be an arrangement that can be deemed to be a tubular shape overall, and tubular shapes formed by combining a plurality of components, and shapes formed by partially notching out into a letter-C shaped part or the like, are included therein. The term "tubular" shape encompasses, circles, ellipses, and polygons with sharp corners or rounded corners, but is not limited thereto.

The sector shaft 23 is housed in the bulging portion 26. The sector shaft 23 is rotatably supported via a bearing that is omitted from illustration. The sector shaft 23 has an outer end portion exposed to an outside of the housing 22. A basal end portion of the pitman arm 13 is fixed to the outer end portion of the sector shaft 23, so as to be integrally rotatable therewith.

The sector portion 24 is disposed within the bulging portion 26. The sector portion 24 has, for example, a fan-like shape as viewed in the axial direction of the sector shaft 23. The sector portion 24 has a plurality of outer teeth 27 provided on an outer peripheral face thereof.

The ball screw device 21 includes a screw shaft 31 that is linked to the steering shaft 11, a ball screw nut 32 that meshes with the outer teeth 27 of the sector portion 24, and a plurality of balls 33. The ball screw device 21 converts rotation of the screw shaft 31 in accordance with rotation of the steering shaft 11 into linear movement of the ball screw nut 32. Thus, the sector shaft 23 rotates, causing the pitman arm 13 to swing.

### (Ball Screw Device 21)

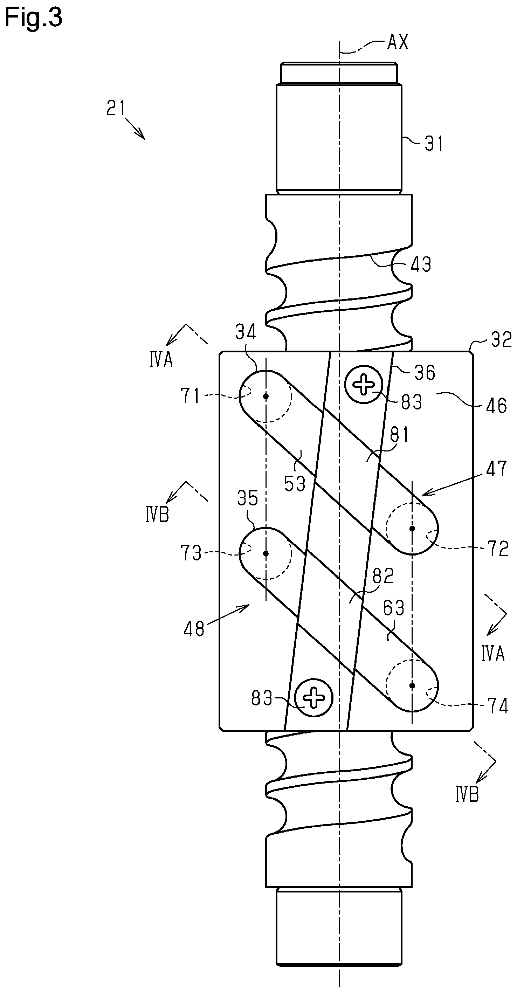

As illustrated in FIG. 2 and FIG. 3, the ball screw device 21 includes a plurality of return tubes, and thus has a plurality of independent circulation paths through which the balls 33 circulate. Specifically, the ball screw device 21 includes a first return tube 34, a second return tube 35, and a holder 36, in addition to the screw shaft 31, the ball screw nut 32, and the plurality of balls 33. The ball screw device 21 has two circulation paths, a first circulation path and a second circulation path. Note that the return tubes are sometimes referred to as circulators. Each component of the ball screw device 21 will be described in detail below.

### (Screw Shaft 31 and Ball Screw Nut 32)

As illustrated in FIG. 2, the screw shaft 31 is rotatably housed within the main unit portion 25. The screw shaft 31 is rotatably supported via bearings 41 and 42 provided at an upper side end portion and a lower side end portion of the main unit portion 25, for example. The upper side end portion of the screw shaft 31 is linked to the steering shaft 11 so as to be integrally rotatable therewith. A groove 43 that is helical is provided on an outer peripheral face of the screw shaft 31. Note that the terms "upper side" and "lower side" refer to, for example, the upper side and the lower side respectively, in an up-down direction of the vehicle.

As illustrated in FIG. 2, FIG. 3, FIG. 4A and FIG. 4B, the ball screw nut 32 has a tubular shape. The ball screw nut 32 according to the present embodiment has a square outer peripheral shape and also a circular inner peripheral shape as viewed in the axial direction. The ball screw nut 32 has rack teeth 44 on one outer side face thereof. The rack teeth 44 mesh with the outer teeth 27 of the sector portion 24. The ball screw nut 32 has an inner peripheral face provided with a groove 45 that is helical.

The groove 43 of the screw shaft 31 faces the groove 45 of the ball screw nut 32 to form a rolling path Rc that is helical. The plurality of balls 33 are disposed in the rolling path Rc in a state of being interposed between the grooves 43 and 45. That is to say, the ball screw nut 32 is fitted onto the outer periphery of the screw shaft 31 via the balls 33.

The ball screw nut 32 has an attaching face 46 to which the first return tube 34 and the second return tube 35 are attached. The attaching face 46 is, for example, the outer side face of the ball screw nut 32 that is on the opposite side from the face on which the rack teeth 44 are provided. The attaching face 46 has a planar form, for example. The first return tube 34 and the second return tube 35 are arranged side by side on the attaching face 46 such that the first return tube 34 is situated above the second return tube 35. The attaching face 46 is configured such that the first return tube 34 and the second return tube 35 are attached from the same attaching direction. The attaching direction is, for example, a direction perpendicular to the axial direction of the ball screw nut 32, i.e., the direction perpendicular to the attaching face 46. The attaching face 46 is provided with a first attaching portion 47 for attaching the first return tube 34 and a second attaching portion 48 for attaching the second return tube 35. Configurations of the first attaching portion 47 and the second attaching portion 48 will be described later.

### (First Return Tube 34 and Second Return Tube 35)

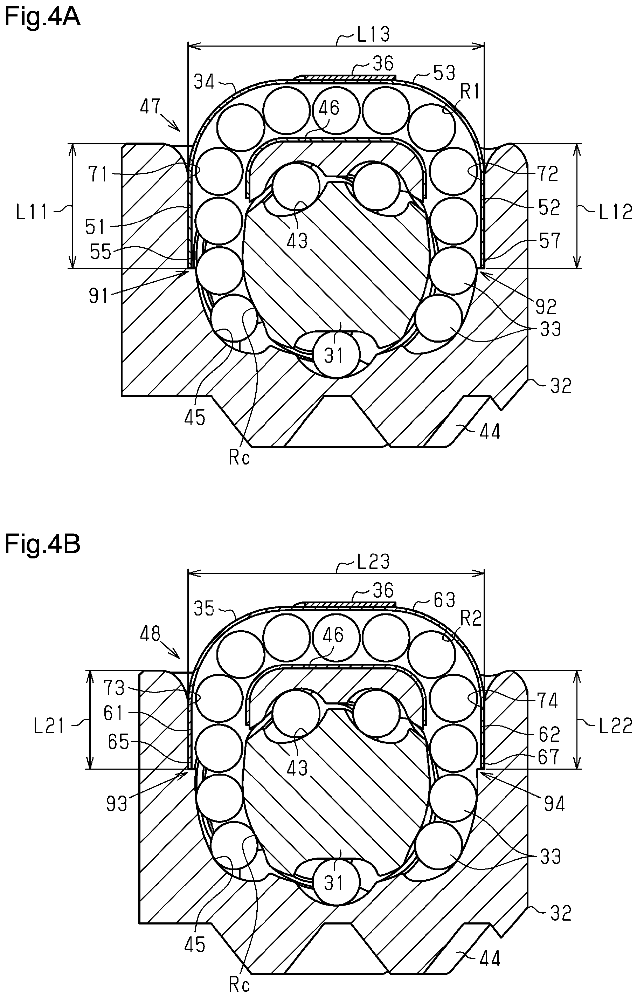

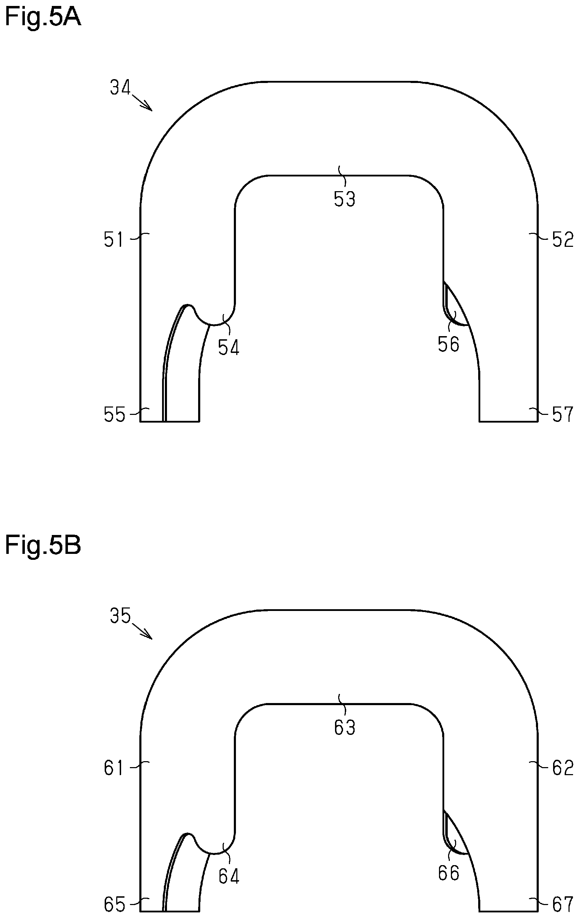

As illustrated in FIG. 4A, FIG. 4B, FIG. 5A and FIG. 5B, the first return tube 34 has a return path R1 that creates a connection between two points of the rolling path Rc. The second return tube 35 has a return path R2 that creates a connection between two other points that are different from the above two points on the rolling path Rc. A section of the rolling path Rc for which a connection is created by the first return tube 34 does not overlap with a section of the rolling path Rc for which a connection is created by the second return tube 35. The return path R1 of the first return tube 34 and the rolling path Rc form a first circulation path, and the return path R2 of the second return tube 35 and the rolling path Rc form a second circulation path.

As illustrated in FIG. 4A and FIG. 5A, the first return tube 34 has a first leg portion 51, a second leg portion 52, and a linking portion 53 that links the first leg portion 51 and the second leg portion 52 to each other. Inner circumferential faces of the first leg portion 51, the second leg portion 52 and the linking portion 53 form the return path R1. The first return tube 34 has of shape of a tubular pipe bent into a substantially letter-C shape, for example.

Specifically, the first leg portion 51 has a tubular shape that extends linearly along the attaching direction. The second leg portion 52 has a tubular shape that extends linearly along the attaching direction. That is to say, the second leg portion 52 extends parallel to the first leg portion 51. The linking portion 53 has a tubular shape. The linking portion 53 extends, for example, in a direction that is perpendicular to the attaching direction and that also intersects the axial direction of the ball screw nut 32. Also, both end portions of the linking portion 53 are bent so as to be linked to the first leg portion 51 and the second leg portion 52.

A distal end of the first leg portion 51 is provided with a tongue portion 54 and a fitting portion 55. The tongue portion 54 protrudes from an inner side portion of the distal end of the first leg portion 51 in the attaching direction. The tongue portion 54 has, for example, a semicircular shape as viewed in a longitudinal direction of the linking portion 53. The fitting portion 55 protrudes in the attaching direction from an outer side portion of the distal end of the first leg portion 51. The fitting portion 55 has, for example, a semicylindrical shape. The fitting portion 55 protrudes beyond the tongue portion 54.

The second leg portion 52 has a shape that is symmetrical to the first leg portion 51 with respect to a straight line extending in the attaching direction. That is to say, a distal end of the second leg portion 52 is provided with a tongue portion 56 and a fitting portion 57. Also, a length L11 of the first leg portion 51 along the attaching direction, i.e., a distance from the linking portion 53 to the distal end of the fitting portion 55, is equal to L12 of the second leg portion 52 along the attaching direction, i.e., a distance from the linking portion 53 to a distal end of the fitting portion 57.

As illustrated in FIG. 4B and FIG. 5B, the second return tube 35 has a similar configuration to the first return tube 34, except for dimensions thereof, which will be described below. That is to say, the second return tube 35 has a first leg portion 61, a second leg portion 62, and a linking portion 63 that links the first leg portion 61 and the second leg portion 62 to each other. The first leg portion 61 has a tongue portion 64 and a fitting portion 65. The second leg portion 62 has a tongue portion 66 and a fitting portion 67.

### (First Attaching Portion 47 and Second Attaching Portion 48)

As illustrated in FIG. 3, FIG. 4A, and FIG. 4B, the first attaching portion 47 has a first through hole 71 into which the first leg portion 51 of the first return tube 34 is inserted, and a second through hole 72 into which the second leg portion 52 of the first return tube 34 is inserted. The second attaching portion 48 has a first through hole 73 into which the first leg portion 61 of the second return tube 35 is inserted, and a second through hole 74 into which the second leg portion 62 of the second return tube 35 is inserted. The first through holes 71 and 73, and the second through holes 72 and 74, are all open in a direction opposite to the attaching direction. That is to say, the first through holes 71 and 73, and the second through holes 72 and 74, open in the same direction. Thus, the first return tube 34 and the second return tube 35 are attached to the ball screw nut 32 from the same attaching direction, as described above.

The first through hole 71 and the second through hole 72 of the first attaching portion 47 are provided at positions corresponding to the above two points of the rolling path Rc between which a connection is created by the first return tube 34 as viewed in the attaching direction. The first through hole 71 and the second through hole 72 are, for example, circular holes as viewed in the attaching direction. A bore diameter of the first through hole 71 is set to be larger than the width of the groove 45 in the axial direction. Thus, an arc-shaped step is provided between an inner circumferential face of the first through hole 71 and an inner face of the groove 45 as viewed in the attaching direction. In other words, the first through hole 71 has a bottom face that is arc-shaped as viewed in the attaching direction. A depth of the first through hole 71, i.e., a distance between the attaching face 46 and the bottom face (step) of the first through hole 71, is equal to the length L 11 of the first leg portion 51 of the first return tube 34.

The second through hole 72 has a shape symmetrical to the first through hole 71 with respect to a straight line extending in the attaching direction. A depth of the second through hole 72, i.e., a distance between the attaching face 46 and the bottom face (step) of the second through hole 72, is equal to the length L 12 of the second leg portion 52 of the first return tube 34.

When the first return tube 34 is attached to the first attaching portion 47, a distal end of the fitting portion 55 of the first leg portion 51 abuts against the bottom face of the first through hole 71, and also the distal end of the fitting portion 57 of the second leg portion 52 abuts against the bottom face of the second through hole 72. Thus, the return path R1 of the first return tube 34 creates a connection between two points on the rolling path Rc, thereby forming the first circulation path.

The first through hole 73 and the second through hole 74 of the second attaching portion 48 are provided at positions corresponding to the above two other points of the rolling path Rc between which a connection is created by the second return tube 35 as viewed in the attaching direction. The first through hole 73 and the second through hole 74 are, for example, circular holes as viewed in the attaching direction. A bore diameter of the first through hole 73 is set to be greater than the width of the groove 45 in the axial direction. Thus, an arc-shaped step is provided between an inner circumferential face of the first through hole 73 and the inner face of the groove 45 as viewed in the attaching direction. In other words, the first through hole 73 has a bottom face that is arc-shaped as viewed in the attaching direction. A depth of the first through hole 73, i.e., a distance between the attaching face 46 and the bottom face (step) of the first through hole 73, is equal to a length L21 of the first leg portion 61 of the second return tube 35.

The second through hole 74 has a shape symmetrical to the first through hole 73 with respect to a straight line extending in the attaching direction. A depth of the second through hole 74, i.e., a distance between the attaching face 46 and a bottom face (step) of the second through hole 74, is equal to a length L22 of the second leg portion 62 of the second return tube 35.

When the second return tube 35 is attached to the second attaching portion 48, a distal end of the fitting portion 65 of the first leg portion 61 abuts against the bottom face of the first through hole 73, and also a distal end of the fitting portion 67 of the second leg portion 62 abuts against the bottom face of the second through hole 74. Thus, the return path R2 of the second return tube 35 creates a connection between two points on the rolling path Rc, thereby forming the second circulation path.

As illustrated in FIG. 3, as viewed from the attaching direction, distances from an axial line AX of the ball screw nut 32 to the first through holes 71 and 73 are equal to each other. Also, as viewed from the attaching direction, distances from the axial line AX of the ball screw nut 32 to the second through holes 72 and 74 are equal to each other. Note that for convenience of description, a straight line that passes through the centers of the first through holes 71 and 73 and is parallel to the axial line AX, and a straight line that passes through the centers of the second through holes 72 and 74 and is parallel to the axial line AX, are indicated by long dashed double-short dashed lines in FIG. 3. A straight line linking the center of the first through hole 71 and the center of the second through hole 72 in the first attaching portion 47 is parallel to a straight line linking the center of the first through hole 73 and the center of the second through hole 74 in the second attaching portion 48. Thus, the linking portion 53 of the first return tube 34 attached to the ball screw nut 32 becomes parallel to the linking portion 63 of the second return tube 35.

### (Holder 36)

As illustrated in FIG. 2 and FIG. 3, the holder 36 fixes the first return tube 34 and the second return tube 35 to the ball screw nut 32. The holder 36 has, for example, an elongated plate shape. The holder 36 has a first recessed portion 81 and a second recessed portion 82. The linking portion 53 of the first return tube 34 is fit into the first recessed portion 81. The linking portion 63 of the second return tube 35 is fit into the second recessed portion 82. The holder 36 is fixed to the attaching face 46 of the ball screw nut 32 by bolts 83. Thus, the holder 36 presses and fixes the first return tube 34 and the second return tube 35 against the attaching face 46 of the ball screw nut 32.

### (Operation of Ball Screw Device 21)

In the ball screw device 21 configured in this way, the balls 33 roll within the rolling path Rc while receiving frictional force from the screw shaft 31 and the ball screw nut 32 in accordance with rotation of the screw shaft 31. When the balls 33 rolling in the first circulation path roll in the rolling path Rc and reach one of the two points between which a connection is created by the first return tube 34, the balls 33 are discharged to the other by passing through the return path R1. Thus, the balls 33 move from a downstream side to an upstream side along the rolling path Rc and circulate through the first circulation path. Note that within the return path R1, as a new ball 33 enters the return path R1 from the rolling path Rc, the ball 33 is pushed by an adjacent ball 33 located behind in a circulation direction and moves through the return path R1.

Of the two end portions of the first return tube 34, the end portion that serves as an entrance for the balls 33 to enter the return path R1 when the screw shaft 31 rotates clockwise in FIG. 4A and that serves as an exit for the balls 33 to be discharged from the return path R1 when the screw shaft 31 rotates counterclockwise is defined as a first end portion 91. Also, of the two end portions of the first return tube 34, the end portion that serves as the exit for the balls 33 to be discharged from the return path R1 when the screw shaft 31 rotates clockwise and that serves as the entrance for the balls 33 to enter the return path R1 when the screw shaft 31 rotates counterclockwise is defined as a second end portion 92. When the first leg portion 51 is inserted into the first through hole 71 and also the second leg portion 52 is inserted into the second through hole 72, as in the present embodiment, the first leg portion 51 includes the first end portion 91 and the second leg portion 52 includes the second end portion 92.

In the same way, when the balls 33 rolling in the second circulation path roll in the rolling path Rc and reach one of the two points between which a connection is created by the second return tube 35, the balls 33 are discharged to the other by passing through the return path R2. Thus, the balls 33 move from the downstream side to the upstream side along the rolling path Rc and circulate through the second circulation path. As described above, the section of the rolling path Rc for which a connection is created by the first return tube 34 does not overlap with the section for which a connection is created by the second return tube 35. Accordingly, the balls 33 circulating in the first circulation path do not pass through the second circulation path, but circulate only within the first circulation path. In the same way, the balls 33 circulating in the second circulation path do not pass through the first circulation path, but circulate only within the second circulation path.

Of the two end portions of the second return tube 35, the end portion that serves as the entrance for the balls 33 to enter the return path R2 when the screw shaft 31 rotates clockwise in FIG. 4B and that serves as the exit for the balls 33 to be discharged from the return path R2 when the screw shaft 31 rotates counterclockwise is defined as a first end portion 93. Also, of the two end portions of the second return tube 35, the end portion that serves as the exit for the balls 33 to be discharged from the return path R2 when the screw shaft 31 rotates clockwise and that serves as the entrance for the balls 33 to enter the return path R2 when the screw shaft 31 rotates counterclockwise is defined as a second end portion 94. When the first leg portion 61 is inserted into the first through hole 73 and also the second leg portion 62 is inserted into the second through hole 74, as in the present embodiment, the first leg portion 61 includes the first end portion 93 and the second leg portion 62 includes the second end portion 94.

As described above, the ball screw device 21 has a plurality of the circulation paths. Accordingly, the length of the rolling path Rc in one circulation path can be prevented from becoming too long, while the length of the rolling path Rc in the entire ball screw device 21 can be increased. Thus, increasing the number of balls 33 rolling within the rolling path Rc enables a load (i.e., frictional force) applied to each of the plurality of balls 33 from the screw shaft 31 and the ball screw nut 32 to be reduced. Accordingly, the life of the balls 33, and hence the life of the ball screw device 21, can be extended. Furthermore, the length of the rolling path Rc in one circulation path does not become too long, and accordingly contact between balls 33 that are adjacent within the rolling path Rc can be suppressed, for example, allowing the ball screw device 21 to operate smoothly.

Here, as a result of extensive research, the present inventors have discovered that torque required to rotate the screw shaft 31, i.e., steering torque, varies depending on the timing at which the balls 33 enter the return tube and the timing at which the balls 33 are discharged from the return tube. Note that the timing at which at least a part of a ball 33 is in a state of coming into contact with the return tube is the timing at which the ball 33 enters the return tube, and the timing at which the ball 33 is no longer in a state of being in contact with the return tube is the timing at which the ball 33 is discharged from the return tube.

Accordingly, in a ball screw device 21 having multiple circulation paths as in the present embodiment, when a timing at which a ball 33 enters the first return tube 34 and a timing at which a ball 33 enters the second return tube 35 coincide with each other, the fluctuation in steering torque will be great. Also, when the timing at which a ball 33 is discharged from the first return tube 34 and the timing at which a ball 33 is discharged from the second return tube 35 coincide with each other, the fluctuation in the steering torque also becomes great.

Taking this point into consideration, in the ball screw device 21, the timings of the balls 33 entering and exiting the first return tube 34 and the second return tube 35 are actively offset. Here, the position of the first end portion 93 of the second return tube 35 relative to the position of the first end portion 91 of the first return tube 34 in a circumferential direction of the ball screw nut 32 is defined as a first relative position. Also, the position of the second end portion 94 of the second return tube 35 relative to the position of the second end portion 92 of the first return tube 34 in the circumferential direction of the ball screw nut 32 is defined as a second relative position. When defined in this way, both the first relative position and the second relative position include offset in the circumferential direction. This can be understood by overlaying FIG. 4A and FIG. 4B, in which the position of the first end portion 91 of the first return tube 34 and the position of the first end portion 93 of the second return tube 35 do not coincide with each other, but are offset in the circumferential direction of the ball screw nut 32, and the position of the second end portion 92 of the first return tube 34 and the position of the second end portion 94 of the second return tube 35 do not coincide with each other, but are offset in the circumferential direction of the ball screw nut 32.

Specifically, as illustrated in FIG. 4A and FIG. 4B, the length L11 of the first leg portion 51 and the length L12 of the second leg portion 52 of the first return tube 34 according to the present embodiment are equal to each other. The length L21 of the first leg portion 61 and the length L22 of the second leg portion 62 of the second return tube 35 are equal to each other. The length L11 of the first leg portion 51 and the length L12 of the second leg portion 52 of the first return tube 34 are longer than the length L21 of the first leg portion 61 and the length L22 of the second leg portion 62 of the second return tube 35. Note that a length L13 of the linking portion 53 of the first return tube 34 and a length L23 of the linking portion 63 of the second return tube 35 are equal with each other.

Thus, the first end portion 93 and the second end portion 94 of the second return tube 35 are located closer to the attaching face 46 than the first end portion 91 and the second end portion 92 of the first return tube 34. That is to say, both the first relative position and the second relative position include an offset in the circumferential direction of the ball screw nut 32. Also, the sum of the amount of circumferential-direction offset of the first relative position and the amount of circumferential-direction offset of the second relative position is different from an integer multiple of the diameter of the ball 33. The sum of offset in the present embodiment is, for example, smaller than the diameter of the balls 33, but may be larger than the diameter of the balls 33.

Next, the functions and effects of the present embodiment will be described.
(1-1) As described above, the ball screw device 21 has the plurality of circulation paths, and accordingly the length of the rolling path Rc in the entire ball screw device 21 can be increased while suppressing the length of the rolling path Rc in one circulation path from becoming too long. Accordingly, reducing the load applied to each of the plurality of balls 33 enables the life of the balls 33, and hence the life of the ball screw device 21, to be extended.

Here, as a comparative example, a ball screw device will be assumed that is configured similarly to the ball screw device 21 except that neither the first relative position nor the second relative position includes offset in the circumferential direction. That is to say, in the comparative example, the position of the first end portion of the first return tube in the circumferential direction of the ball screw nut coincides with the position of the first end portion of the second return tube, and also the position of the second end portion of the first return tube in the circumferential direction of the ball screw nut coincides with the position of the second end portion of the second return tube.

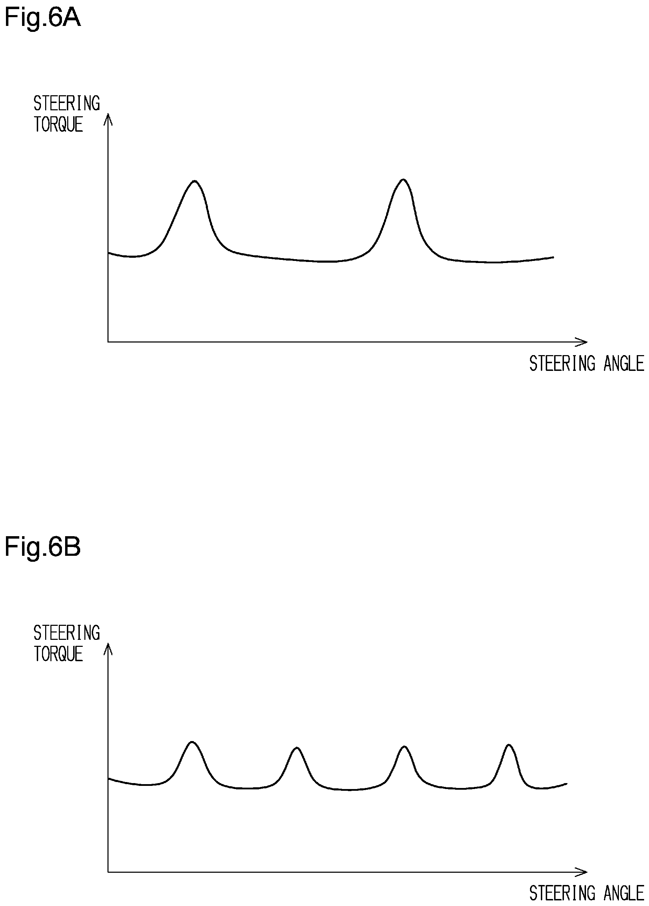

Thus, the timing at which the ball enters the first return tube and the timing at which the ball enters the second return tube, and the timing at which the ball is discharged from the first return tube and the timing at which the ball is discharged from the second return tube, readily coincide with each other. As a result, as shown in FIG. 6A, for example, in the ball screw device according to the comparative example, when steering is performed at a constant steering speed, a rotation angle of the screw shaft 31, i.e., the steering torque varies greatly with respect to the steering angle.

With respect to this point, in the ball screw device 21 according to the present embodiment, both the first relative position and the second relative position include offset in the circumferential direction. Accordingly, in at least one of the timing at which the ball 33 enters the first return tube 34 and the timing at which the ball 33 enters the second return tube 35, and the timing at which the ball 33 is discharged from the first return tube 34 and the timing at which the ball 33 is discharged from the second return tube 35, the timings are likely to be offset with each other. Thus, for example, as shown in FIG. 6B, in the ball screw device 21 according to the present embodiment, when steering is performed at a constant steering speed, the fluctuation in steering torque relative to the steering angle is reduced. Thus, smooth operation of the ball screw device 21 can be ensured.

Note that in the comparative example, the layout of the balls in the return path in the first return tube and the layout of the balls in the return path in the first return tube do not necessarily match each other. For example, the balls may be laid out in a zigzag (staggered) pattern in the first return tube and also the balls may be laid out in a straight line in the second return tube. As a result, the timing at which the balls are discharged from the first return tube may be offset from the timing at which the balls are discharged from the second return tube. However, such offset in timing occurs by chance. Accordingly, in the ball screw device according to the comparative example, the timing at which the ball enters the first return tube and the timing at which the ball enters the second return tube, and the timing at which the ball is discharged from the first return tube and the timing at which the ball is discharged from the second return tube, readily coincide with each other.

(1-2) The steering system 1 includes the ball screw device 21 and the steering shaft 11 linked to the screw shaft 31. According to the above configuration, fluctuations in steering torque are suppressed, and accordingly deterioration of steering feeling can be suppressed.

(1-3) The sum of the amount of offset of the first relative position in the circumferential direction and the amount of offset of the second relative position in the circumferential direction is different from an integer multiple of the diameter of the ball 33. Accordingly, in at least one of the timing at which the ball 33 enters the first return tube 34 and the timing at which the ball 33 enters the second return tube 35, and the timing at which the ball 33 is discharged from the first return tube 34 and the timing at which the ball 33 is discharged from the second return tube 35, the timings are suitably readily offset from each other.

(1-4) The return tubes 34 and 35 respectively have the first leg portion 51 and 61 having a length along the attaching direction, and the second leg portion 52 and 62 having a length along the attaching direction. The length L11 of the first leg portion 51 and the length L12 of the second leg portion 52 of the first return tube 34 are equal to each other. The length L21 of the first leg portion 61 and the length L22 of the second leg portion 62 of the second return tube 35 are equal to each other.

According to the above configuration, the first leg portion 51 of the first return tube 34 can be inserted into either the first through hole 71 or the second through hole 72, and also the second leg portion 52 can be inserted into either the first through hole 71 or the second through hole 72. Accordingly, when attaching the first return tube 34, it is not necessary to take into consideration the combination of the first leg portion 51 and the first through hole 71, and the combination of the second leg portion 52 and the second through hole 72. This facilitates work of attaching the first return tube 34. In the same way, the first leg portion 61 of the second return tube 35 can be inserted into either the first through hole 73 or the second through hole 74, and also the second leg portion 62 can be inserted into either the first through hole 73 or the second through hole 74. This facilitates work of attaching the second return tube 35.

### (Second Embodiment)

Next, a second embodiment of a ball screw device and a steering system will be described below with reference to the drawings. Note that for convenience of description, the same configurations are denoted by the same signs as those in the first embodiment, and description thereof will be omitted.

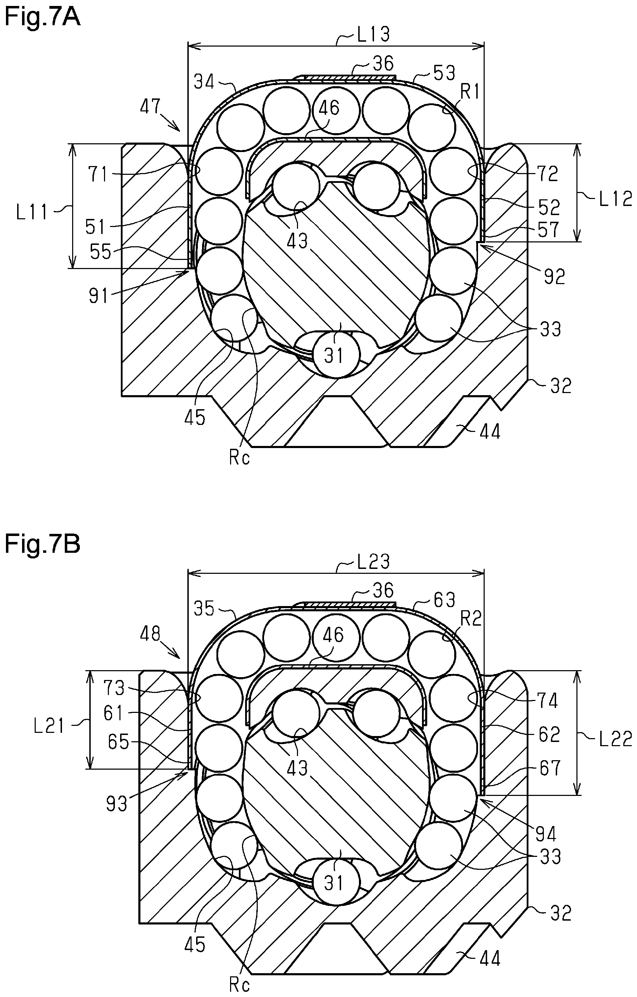

As illustrated in FIG. 7A and FIG. 7B, the length L11 of the first leg portion 51 of the first return tube 34 is longer than the length L12 of the second leg portion 52 in the present embodiment. The length L21 of the first leg portion 61 of the second return tube 35 is shorter than the length L22 of the second leg portion 62. The length L11 of the first leg portion 51 of the first return tube 34 and the length L22 of the second leg portion 62 of the second return tube 35 are equal to each other. The length L12 of the second leg portion 52 of the first return tube 34 and the length L21 of the first leg portion 61 of the second return tube 35 are equal to each other. The length L13 of the linking portion 53 of the first return tube 34 and the length L23 of the linking portion 63 of the second return tube 35 are equal to each other.

Thus, the first end portion 93 of the second return tube 35 is located closer to the attaching face 46 than the first end portion 91 of the first return tube 34 is. Also, the second end portion 92 of the first return tube 34 is located closer to the attaching face 46 than the second end portion 94 of the second return tube 35 is. That is to say, both the first relative position and the second relative position include an offset in the circumferential direction of the ball screw nut 32. Also, the sum of the amount of circumferential-direction offset of the first relative position and the amount of circumferential-direction offset of the second relative position is different from an integer multiple of the diameter of the ball 33. The sum of offset in the present embodiment is, for example, smaller than the diameter of the balls 33, but may be larger than the diameter of the balls 33.

The present embodiment described above has the following functions and effects in addition to the functions and effects that are similar to the functions and effects described above in (1-1) to (1-3) according to the first embodiment. (2-1) The return tubes 34, 35 respectively have the first leg portions 51 and 61 having a length along the attaching direction, the second leg portions 52 and 62 having a length along the attaching direction, and the linking portions 53 and 63 that link the first leg portions 51 and 61 and the second leg portions 52 and 62 to each other and have a length along a direction intersecting the attaching direction. The length L11 of the first leg portion 51 of the first return tube 34 is different from the length L12 of the second leg portion 52 of the first return tube 34. The length L21 of the first leg portion 61 of the second return tube 35 is different from the length L22 of the second leg portion 62 of the second return tube 35. The length L11 of the first leg portion 51 of the first return tube 34 and the length L22 of the second leg portion 62 of the second return tube 35 are equal to each other. The length L12 of the second leg portion 52 of the first return tube 34 and the length L21 of the first leg portion 61 of the second return tube 35 are equal to each other. The length L13 of the linking portion 53 of the first return tube 34 and the length L13 of the linking portion 63 of the second return tube 35 are equal to each other. Accordingly, the first return tube 34 can be formed in the same shape as the second return tube 35. That is to say, the first return tube 34 can be used as the second return tube 35, and also the second return tube 35 can be used as the first return tube 34. This enables reduction in manufacturing costs, for example, as compared to a case in which the shape of the first return tube 34 is different from the shape of the second return tube 35.

### (Third Embodiment)

Next, a third embodiment of a ball screw device and a steering system will be described below with reference to the drawings. Note that for convenience of description, the same configurations are denoted by the same signs as those in the first embodiment, and description thereof will be omitted.

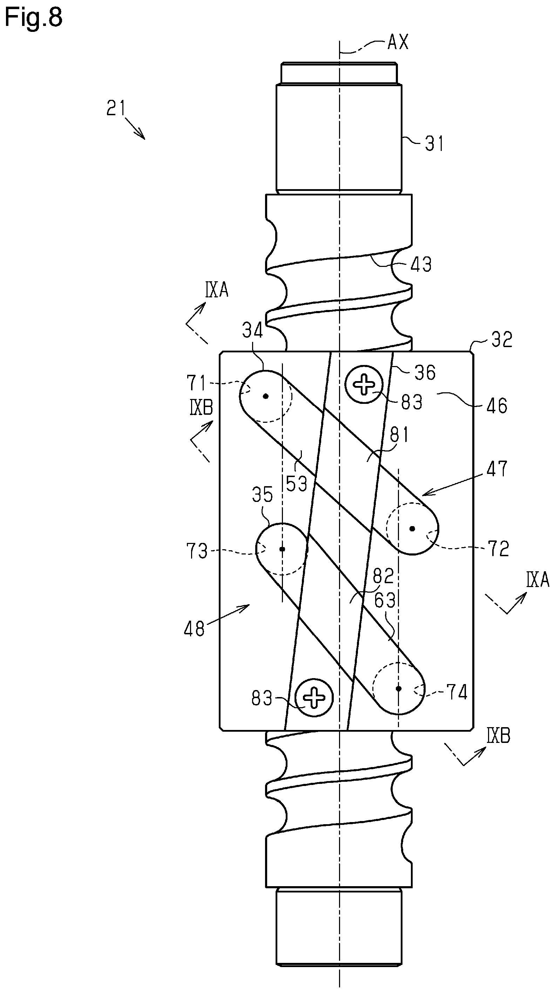

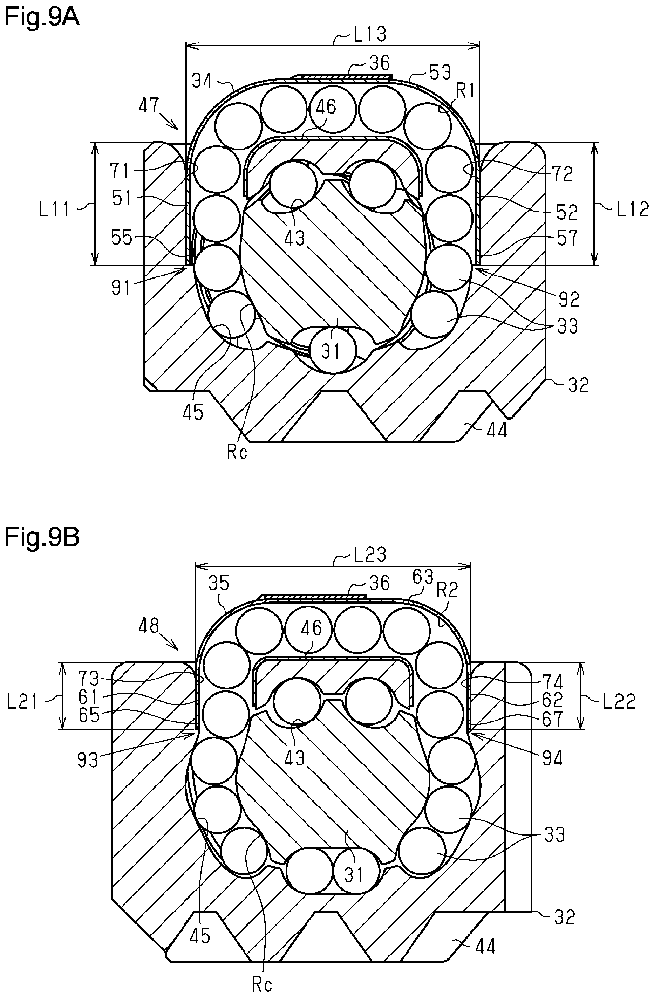

As illustrated in FIG. 8, FIG. 9A, and FIG. 9B, the length L11 of the first leg portion 51 and the length L12 of the second leg portion 52 of the first return tube 34 according to the present embodiment are equal to each other. The length L21 of the first leg portion 61 and the length L22 of the second leg portion 62 of the second return tube 35 are equal to each other. The length L11 of the first leg portion 51 and the length L12 of the second leg portion 52 of the first return tube 34 are longer than the length L21 of the first leg portion 61 and the length L22 of the second leg portion 62 of the second return tube 35. The length L13 of the linking portion 53 of the first return tube 34 is longer than the length L23 of the linking portion 63 of the second return tube 35.

As illustrated in FIG. 8, the first through hole 73 of the second attaching portion 48 is provided closer to the axial line AX of the ball screw nut 32 than the first through hole 71 of the first attaching portion 47 as viewed in the attaching direction. Also, the second through hole 74 of the second attaching portion 48 is provided closer to the axial line AX of the ball screw nut 32 than the second through hole 72 of the first attaching portion 47. Note that for convenience of description, a straight line that passes through the center of the first through hole 73 and is parallel to the axial line AX, and a straight line that passes through the center of the second through hole 74 and is parallel to the axial line AX, are indicated by long dashed double-short dashed lines in FIG. 8. A straight line connecting the center of the first through hole 71 and the center of the second through hole 72 in the first attaching portion 47 intersects a straight line connecting the center of the first through hole 73 and the center of the second through hole 74 in the second attaching portion 48. Accordingly, the linking portion 53 of the first return tube 34 and the linking portion 63 of the second return tube 35 are not parallel to each other.

Thus, the first end portion 93 and the second end portion 94 of the second return tube 35 are located closer to the attaching face 46 than the first end portion 91 and the second end portion 92 of the first return tube 34. That is to say, both the first relative position and the second relative position include an offset in the circumferential direction of the ball screw nut 32. Also, the sum of the amount of circumferential-direction offset of the first relative position and the amount of circumferential-direction offset of the second relative position is different from an integer multiple of the diameter of the ball 33. The sum of offset in the present embodiment is, for example, smaller than the diameter of the balls 33, but may be larger than the diameter of the balls 33.

The present embodiment described above has the following functions and effects in addition to the functions and effects that are similar to the functions and effects described above in (1-1) to (1-4) according to the first embodiment.
(3-1) The return tubes 34 and 35 respectively have the first leg portions 51 and 61 having a length along the attaching direction, the second leg portions 52 and 62 having a length along the attaching direction, and the linking portions 53 and 63 that link the first leg portions 51 and 61 and the second leg portions 52 and 62 to each other and have a length along the direction intersecting the attaching direction. The length L13 of the linking portion 53 of the first return tube 34 is different from the length L23 of the linking portion 63 of the second return tube 35. Accordingly, the second return tube 35 cannot be attached to the first attaching portion 47, for example. This enables incorrect assembly of the first return tube 34 and the second return tube 35 to be suppressed.

Each of the above embodiments can be carried out modified as follows. The above embodiments and the following modifications can be combined with each other and carried out insofar as no technical contradiction arises.
- The first return tube 34 and the second return tube 35 are described as being fixed to the ball screw nut 32 by a single holder 36. However, this is not restrictive, and the first return tube 34 and the second return tube 35 may be fixed to the ball screw nut 32 by separate holders, for example. Also, the first return tube 34 and the second return tube 35 may be fixed to the ball screw nut 32 by an adhesive or the like without using a holder, for example, and the fixing method thereof can be changed as appropriate.
- The sum of the amount of offset in the circumferential direction of the first relative position and the amount of offset in the circumferential direction of the second relative position may be equal to an integer multiple of the diameter of the ball 33. As long as at least one of the first relative position and the second relative position includes offset in the circumferential direction of the ball screw nut 32, the shapes of the first return tube 34 and the second return tube 35 can be changed as appropriate. For example, in the first embodiment, the length L11 of the first leg portion 51 of the first return tube 34 may be equal to the length L21 of the first leg portion 61 of the second return tube 35. That is to say, the first relative position may not include offset in the circumferential direction, and just the second relative position may include offset in the circumferential direction. Also, for example, in the first embodiment, the length L12 of the second leg portion 52 of the first return tube 34 may be equal to the length L22 of the second leg portion 62 of the second return tube 35. That is to say, just the first relative position may include offset in the circumferential direction, and the second relative position may not include offset in the circumferential direction. Also, for example, in the second embodiment, the length L11 of the first leg portion 51 of the first return tube 34 may be made different from the length L22 of the second leg portion 62 of the second return tube 35. Also, for example, in the third embodiment, the length L11 of the first leg portion 51 of the first return tube 34 may be made to be different from the length L12 of the second leg portion 52 thereof.
- The ball screw device 21 may include three or more return tubes. In this case, the relative positions of the first end portion 91 of the first return tube 34 and the first end portion 93 of the second return tube 35 with respect to the first end portions of the other return tubes may or may not include offset in the circumferential direction of the ball screw nut 32. Also, the relative positions of the second end portion 92 of the first return tube 34 and the second end portion 94 of the second return tube 35 with respect to the second end portions of the other return tubes may or may not include offset in the circumferential direction of the ball screw nut 32.
- The steering system 1 may be provided with a hydraulic actuator that generates an assist force using hydraulic pressure, in addition to or instead of the electric actuator 15. Also, the steering system 1 does not have to be provided with an actuator that generates assist force.
- Although the ball screw device 21 is described as being used to linearly move the ball screw nut 32 by rotating the screw shaft 31, the ball screw device 21 may be used to linearly move the screw shaft 31 by rotating the ball screw nut 32.
- The ball screw device 21 may be applied to devices other than the steering system 1. Various modifications can be made without departing from the scope of the invention as defined in the accompanying claims. According to a preferred embodiment of the invention, each of a plurality of the attaching portions may have a first through hole that opens in the attaching direction, into which the first end portion is inserted, and a second through hole that opens in the attaching direction, into which the second end portion is inserted.

According to a preferred embodiment of the invention, the ball screw nut may have a planar attaching face, and the plurality of return tubes may be disposed side by side on the attaching face.

## Claims

1. A ball screw device (21), comprising:
a screw shaft (31) having a groove (43) on an outer periphery of the screw shaft (31);
a ball screw nut (32) having a groove (45) on an inner periphery of the ball screw nut (32);
a plurality of return tubes (34, 35); and
a plurality of balls (33), wherein
the groove (43) of the screw shaft (31) faces the groove (45) of the ball screw nut (32) to form a helical rolling path (Rc),
each of the plurality of return tubes (34, 35) includes
a return path (R1, R2) configured to create a connection between two points of the rolling path (Rc), the return path (R1, R2) and the rolling path (Rc) forming a circulation path in which the balls (33) are disposed,
a first end portion (91, 93) that serves as an entrance for the balls (33) to enter the return path (R1, R2) when the screw shaft (31) or the ball screw nut (32) rotates clockwise, and that serves as an exit for the balls (33) to be discharged from the return path (R1, R2) when the screw shaft (31) or the ball screw nut (32) rotates counterclockwise, and
a second end portion (92, 94) that serves as an exit for the balls (33) to be discharged from the return path (R1, R2) when the screw shaft (31) or the ball screw nut (32) rotates clockwise, and that serves as an entrance for the balls (33) to enter the return path (R1, R2) when the screw shaft (31) or the ball screw nut (32) rotates counterclockwise,
the ball screw nut (32) has a plurality of attaching portions (47, 48) configured such that the plurality of return tubes (34, 35) is attached from a same attaching direction,
the plurality of return tubes (34, 35) includes at least a first return tube (34) and a second return tube (35),
a position of the first end portion (93) of the second return tube (35) relative to a position of the first end portion(91) of the first return tube (34) in a circumferential direction of the ball screw nut (32) is a first relative position, and a position of the second end portion (94) of the second return tube (35) relative to a position of the second end portion (92) of the first return tube (34) in the circumferential direction is a second relative position, and
**characterized in that** at least one of the first relative position and the second relative position includes offset in the circumferential direction.

2. The ball screw device (21) according to claim 1, wherein a sum of an offset amount in the circumferential direction of the first relative position and an offset amount in the circumferential direction of the second relative position is different from an integer multiple of a diameter of each of the balls (33).

3. The ball screw device (21) according to claim 1 or 2, wherein
each of the plurality of return tubes (34, 35) includes
a first leg portion (51, 61) having a length along the attaching direction, and
a second leg portion (52, 62) having a length along the attaching direction,
the length of the first leg portion (51) of the first return tube (34) and the length of the second leg portion (52) of the first return tube (34) are equal to each other, and
the length of the first leg portion (61) of the second return tube (35) and the length of the second leg portion (62) of the second return tube (35) are equal to each other.

4. The ball screw device (21) according to any one of claims 1 to 3, wherein
each of the plurality of return tubes (34, 35) includes
a first leg portion (51, 61) having a length along the attaching direction,
a second leg portion (52, 62) having a length along the attaching direction, and
a linking portion (53, 63) that links the first leg portion (51, 61) and the second leg portion (52, 62) to each other, the linking portion (53, 63) having a length along a direction intersecting the attaching direction, and
the length of the linking portion (53) of the first return tube (34) is different from the length of the linking portion (63) of the second return tube (35).

5. The ball screw device (21) according to claim 1 or 2, wherein
each of the plurality of return tubes (34, 35) includes
a first leg portion (51, 61) having a length along the attaching direction,
a second leg portion (52, 62) having a length along the attaching direction, and
a linking portion (53, 63) that links the first leg portion (51, 61) and the second leg portion (52, 62) to each other, the linking portion (53, 63) having a length along a direction intersecting the attaching direction,
the length of the first leg portion (51) of the first return tube (34) is different from the length of the second leg portion (52) of the first return tube (34),
the length of the first leg portion (61) of the second return tube (35) is different from the length of the second leg portion (62) of the second return tube (35),
the length of the first leg portion (51) of the first return tube (34) and the length of the second leg portion (62) of the second return tube (35) are equal to each other,
the length of the second leg portion (52) of the first return tube (34) and the length of the first leg portion (61) of the second return tube (35) are equal to each other, and
the length of the linking portion (53) of the first return tube (34) and the length of the linking portion (63) of the second return tube (35) are equal to each other.

6. A steering system (1), comprising:
the ball screw device (21) according to any one of claims 1 to 5; and
a steering shaft (11) linked to the screw shaft (31).

## Patentansprüche

1. Kugelumlaufspindelvorrichtung (21), umfassend:
eine Spindelwelle (31) mit einer Nut (43) an einem äußeren Umfang der Spindelwelle (31);
eine Kugelumlaufspindelmutter (32) mit einer Nut (43) an ihrem inneren Umfang;
eine Mehrzahl von Rückführrohren (34); und
eine Mehrzahl von Kugeln (33), wobei
die Nut (43) der Spindelwelle (31) der Nut (45) der Kugelumlaufmutter (32) gegenüberliegt zur Bildung einer spiralförmigen Rollbahn (Rc), und
jedes der Mehrzahl von Rückführrohren (34, 35) umfasst:
einen Rücklaufpfad (R1, R2), der so konfiguriert ist, dass er eine Verbindung zwischen zwei Punkten der Rollbahn (Rc) herstellt, wobei der Rücklaufpfad (R1, R2) und die Rollbahn (Rc) einen Umlaufpfad bilden, in dem die Kugeln (33) angeordnet sind,
einen ersten Endabschnitt (91, 93), der als Eingang für die Kugeln (33) in den Rücklaufpfad (R1, R2) dient, wenn sich die Spindelwelle (31) oder die Kugelumlaufspindelmutter (32) im Uhrzeigersinn dreht, und der als Ausgang für die Kugeln (33) aus dem Rücklaufpfad (R1, R2) dient, wenn sich die Spindelwelle (31) oder die Kugelumlaufspindelmutter (32) gegen den Uhrzeigersinn dreht, und
einen zweiten Endabschnitt (92, 94), der als Ausgang für die Kugeln (33) aus dem Rücklaufpfad (R1, R2) dient, wenn sich die Spindelwelle oder die Kugelumlaufspindelmutter (32) im Uhrzeigersinn dreht, und der als Eingang für die Kugeln (33) in den Rücklaufpfad (R1, R2) dient, wenn sich die Spindelwelle oder die Kugelumlaufspindelmutter (32) gegen den Uhrzeigersinn dreht,
die Kugelumlaufspindelmutter (32) mehrere Befestigungsabschnitte (47, 48) aufweist, die so konfiguriert sind, dass die mehreren Rückführrohre (34, 35) aus derselben Befestigungsrichtung befestigt sind,
die mehreren Rückführrohre (34, 35) mindestens ein erstes Rückführrohr (34) und ein zweites Rückführrohr (35) umfassen,
eine Position des ersten Endabschnitts (93) des zweiten Rückführrohrs (35) relativ zu einer Position des ersten Endabschnitts (91) des ersten Rückführrohrs (34) in einer Umfangsrichtung der Kugelumlaufspindelmutter (32) eine erste relative Position ist, und eine Position des zweiten Endabschnitts (94) des zweiten Rückführrohrs (35) relativ zu einer Position des zweiten Endabschnitts (92) des ersten Rückführrohrs (34) in Umfangsrichtung eine zweite relative Position ist,
**dadurch gekennzeichnet, dass**
mindestens eine der ersten relativen Position und der zweiten relativen Position einen Versatz in Umfangsrichtung aufweist.

2. Kugelumlaufspindelvorrichtung (21) nach Anspruch 1, wobei die Summe aus einem Versatzbetrag in Umfangsrichtung der ersten Relativposition und einem Versatzbetrag in Umfangsrichtung der zweiten Relativposition sich von einem ganzzahligen Vielfachen eines Durchmessers jeder der Kugeln (33) unterscheidet.

3. Kugelumlaufspindelvorrichtung (21) nach Anspruch 1 oder 2, wobei
jedes der mehreren Rücklaufrohre (34, 35) umfasst:
einen ersten Schenkelabschnitt (51, 61) mit einer Länge entlang der Befestigungsrichtung und
einen zweiten Schenkelabschnitt (52, 62) mit einer Länge entlang der Befestigungsrichtung,
wobei die Länge des ersten Schenkelabschnitts (51) des ersten Rücklaufrohrs (34) und die Länge des zweiten Schenkelabschnitts (61) des ersten Rücklaufrohrs (34) zueinander gleich sind und die Länge des ersten Schenkelabschnitts (61) des zweiten Rücklaufrohrs (35) und die Länge des zweiten Schenkelabschnitts (62) des zweiten Rücklaufrohrs (35) zueinander gleich sind.

4. Kugelumlaufspindelvorrichtung (21) nach einem der Ansprüche 1 bis 3, wobei
jedes der mehreren Rückführrohre (34, 35) umfasst:
einen ersten Schenkelabschnitt (51, 61) mit einer Länge entlang der Befestigungsrichtung,
einen zweiten Schenkelabschnitt (52, 62) mit einer Länge entlang der Befestigungsrichtung, und
einen Verbindungsabschnitt (53, 63), der den ersten Schenkelabschnitt (51, 61) und den zweiten Schenkelabschnitt (52, 62) miteinander verbindet, wobei der Verbindungsabschnitt (53, 63) eine Länge entlang einer Richtung aufweist, die die Befestigungsrichtung schneidet, und
die Länge des Verbindungsabschnitts (53) des ersten Rückführrohrs (34) sich von der Länge des Verbindungsabschnitts (63) des zweiten Rückführrohrs (35) unterscheidet.

5. Kugelumlaufspindelvorrichtung (21) nach Anspruch 1 oder 2, wobei
jedes der mehreren Rückführrohre (34, 35) umfasst:
einen ersten Schenkelabschnitt (51, 61) mit einer Länge entlang der Befestigungsrichtung,
einen zweiten Schenkelabschnitt (52, 62) mit einer Länge entlang der Befestigungsrichtung und
einen Verbindungsabschnitt (53, 63), der den ersten Schenkelabschnitt (51, 61) und den zweiten Schenkelabschnitt (52, 62) miteinander verbindet, wobei der Verbindungsabschnitt (53, 63) eine Länge entlang einer Richtung aufweist, die die Befestigungsrichtung schneidet,
die Länge des ersten Schenkelabschnitts (51) des ersten Rückführrohrs (34) sich von der Länge des zweiten Schenkelabschnitts (52) des ersten Rückführrohrs (34) unterscheidet,
die Länge des ersten Schenkelabschnitts (61) des zweiten Rücklaufrohrs (35) sich von der Länge des zweiten Schenkelabschnitts (62) des zweiten Rücklaufrohrs (35) unterscheidet,
die Länge des ersten Schenkelabschnitts (51) des ersten Rücklaufrohrs (34) und die Länge des zweiten Schenkelabschnitts (62) des zweiten Rücklaufrohrs (35) gleich sind,
die Länge des zweiten Schenkelabschnitts (52) des ersten Rücklaufrohrs (34) und die Länge des ersten Schenkelabschnitts (61) des zweiten Rücklaufrohrs (35) gleich zueinander sind, und
die Länge des Verbindungsabschnitts (53) des ersten Rücklaufrohrs (34) und die Länge des Verbindungsabschnitts (63) des zweiten Rücklaufrohrs (35) zueinander gleich sind.

6. Lenksystem mit
einer Kugelumlaufspindelvorrichtung (21) gemäß einem der Ansprüche 1 bis 5; und
einer mit der Spindelwelle (31) verbundenen Lenkwelle (11).

## Revendications

1. dispositif de vis à billes (21), comprenant :
une tige de vis (31) présentant une rainure (43) sur une périphérie extérieure de la tige de vis (31) ;
un écrou de vis à billes (32) présentant une rainure (45) sur une périphérie intérieure de l'écrou de vis à billes (32) ;
une pluralité de tubes de retour (34, 35) ; et
une pluralité de billes (33), dans lequel
la rainure (43) de la tige de vis (31) fait face à la rainure (45) de l'écrou de vis à billes (32) pour former un chemin de roulement hélicoïdal (Rc),
chacun de la pluralité des tubes de retour (34, 35) inclut
un chemin de retour (R1, R2) configuré pour créer un raccord entre deux points du chemin de roulement (Rc), le chemin de retour (R1, R2) et le chemin de roulement (Rc) formant un chemin de circulation dans lequel sont disposées les billes (33) ,
une première partie d'extrémité (91, 93) qui sert d'entrée pour les billes (33) pour qu'elles entrent dans le chemin de retour (R1, R2) lorsque la tige de vis (31) ou l'écrou de vis à billes (32) tourne dans le sens des aiguilles d'une montre, et qui sert de sortie pour les billes (33) pour qu'elles soient sorties du chemin de retour (R1, R2) lorsque la tige de vis (31) ou l'écrou de vis à billes (32) tourne dans le sens inverse des aiguilles d'une montre, et
une seconde portion d'extrémité (92, 94) qui sert de sortie pour que les billes (33) soient sorties du chemin de retour (R1, R2) lorsque la tige de vis (31) ou l'écrou de vis à billes (32) tourne dans le sens des aiguilles d'une montre, et qui sert d'entrée pour que les billes (33) entrent dans le chemin de retour (R1, R2) lorsque la tige de vis (31) ou l'écrou de vis à billes (32) tourne dans le sens inverse des aiguilles d'une montre, l'écrou de vis à billes (32) a une pluralité de parties de fixation (47, 48) configurées de manière telle que la pluralité de tubes de retour (34, 35) est fixée à partir d'une même direction de fixation, la pluralité de tubes de retour (34, 35) inclut au moins un premier tube de retour (34) et un second tube de retour (35),
la position de la première partie d'extrémité (93) du second tube de retour (35) relativement de la position de la première partie d'extrémité (91) du premier tube de retour (34) dans la direction circonférentielle de l'écrou de vis à billes (32) est une première position relative, et une position de la seconde partie d'extrémité (94) du second tube de retour (35) relativement à la position de la seconde partie d'extrémité (92) du premier tube de retour (34) dans la direction circonférentielle est une seconde position relative, et **caractérisé en ce qu'**au moins une des première et seconde positions relatives inclut un décalage dans la direction circonférentielle.

2. Dispositif de vis à billes (21) selon la revendication 1, dans lequel une somme d'une quantité de décalage dans la direction circonférentielle de la première position relative et d'une quantité de décalage dans la direction circonférentielle de la seconde position relative est différente d'un nombre entier multiple du diamètre de chacune des billes (33).

3. Dispositif de vis à billes (21) selon la revendication 1 ou 2, dans lequel chacun de la pluralité de tubes de retour (34, 35) inclut
une première partie de segment (51, 61) présentant une longueur dans le sens de la fixation, et
une seconde partie de segment (52, 62) présentant une longueur le long de la direction de fixation, la longueur de la première partie de segment (51) du premier tube de retour (34) et la longueur de la seconde partie de segment (52) du premier tube de retour (34) sont égales l'une à l'autre, et
la longueur de la première partie de segment (61) du second tube de retour (35) et la longueur de la seconde partie de segment (62) du second tube de retour (35) sont égales l'une à l'autre.

4. Dispositif de vis à billes (21) selon l'une quelconque des revendications 1 à 3, dans lequel chacun de la pluralité de tubes de retour (34, 35) inclut
une première partie de segment (51, 61) présentant une longueur dans le sens de la fixation,
une seconde partie de segment (52, 62) présentant une longueur dans le sens de la fixation, et
une partie de liaison (53, 63) qui lie la première partie de segment (51, 61) et la seconde partie de segment (52, 62) l'une à l'autre, la partie de liaison (53, 63) présentant une longueur le long d'une direction intersectant la direction de fixation, et
la longueur de la partie de liaison (53) du premier tube de retour (34) est différente de la longueur de la partie de liaison (63) du second tube de retour (35).

5. Dispositif de vis à billes (21) selon la revendication 1 ou 2, dans lequel chacun de la pluralité de tubes de retour (34, 35) inclut
une première partie de segment (51, 61) présentant une longueur dans le sens de la fixation,
une seconde partie de segment (52, 62) présentant une longueur dans le sens de la fixation, et
une partie de liaison (53, 63) qui lie la première partie de segment (51, 61) et la seconde partie de segment (52, 62) l'une à l'autre, la partie de liaison (53, 63) présentant une longueur le long d'une direction intersectant la direction de fixation,
la longueur de la première partie de segment (51) du premier tube de retour (34) est différente de la longueur de la seconde partie de segment (52) du premier tube de retour (34),
la longueur de la première partie de segment (61) du second tube de retour (35) est différente de la longueur de la seconde partie de segment (62) du second tube de retour (35),
la longueur de la première partie de segment (51) du premier tube de retour (34) et la longueur de la seconde partie de segment (62) du second tube de retour (35) sont égales l'une à l'autre,
la longueur de la seconde partie de segment (52) du premier tube de retour (34) et la longueur de la première partie de segment (61) du second tube de retour (35) sont égales l'une à l'autre, et
la longueur de la partie de liaison (53) du premier tube de retour (34) et la longueur de la partie de liaison (63) du second tube de retour (35) sont égales l'une à l'autre.

6. Système de direction (1), comprenant :
le dispositif de vis à billes (21) selon l'une quelconque des revendications 1 à 5 ; et
un arbre de direction (11) lié à l'arbre à vis (31).
